# FASCICULE DE BREVET EUROPEEN

(11) **EP 0 687 819 B1**
(45) Date de publication et mention de la délivrance du brevet: **18.09.2002**
(21) Numéro de dépôt: 95401149.0
(22) Date de dépôt: 17.05.1995
(51) Int. Cl.: F16B 5/10, F16B 21/04

(54) **Dispositif d'assemblage d'au moins deux éléments par exemple de carrosserie automobile**
Befestigungsvorrichtung für mindestens zwei Bauteile, z. B. Fahrzeugkarosserie
Fastening device for at least two elements, e.g. for automobile bodywork

(30) Priorité: 19.05.1994 FR 9406131
(43) Date de publication de la demande: 20.12.1995
(73) Titulaire: AUTOMOBILES PEUGEOT, 75116 Paris (FR); AUTOMOBILES CITROEN, 92200 Neuilly-sur-Seine (FR)
(72) Inventeur: Schaller, Jean-Pierre, F-25550 Raynans (FR)
(74) Mandataire: Bentz, Jean-Paul

(56) Documents cités:
- EP-A- 0 367 640
- FR-A- 1 330 050
- FR-A- 1 552 738
- GB-A- 419 926
- US-A- 2 485 010
- US-A- 4 047 266
- US-A- 4 801 232

## Description

La présente invention concerne une assemblage mécanique démontable comprenant un dispositif d'assemblage et au moins deux éléments par exemple de carrosserie automobile selon le préambule de la revendication 1, comme connue par FR-A-1330050. Un tel dispositif s'applique notamment à la fixation d'un pare-chocs sur la carrosserie ou le châssis d'un véhicule automobile.

La carrosserie d'un véhicule automobile est généralement constituée de différents éléments de formes et de matériaux variables, qui sont généralement assemblés ensemble par des dispositifs de fixation du type vis-rondelle-écrou.

Ces dispositifs de fixation connus ne permettent cependant pas un assemblage et un démontage rapides des éléments de carrosserie pour remplacer les éléments détériorés, en cas par exemple d'un choc ou d'une usure trop importante.

La rigidité de ces dispositifs de fixation connus constitue également un inconvénient, notamment lorsque des éléments de carrosserie adjacents subissent des déformations différentes, à la suite par exemple de chocs ou d'écarts de température importants.

En effet, de telles liaisons rigides constituent des zones de concentration de contrainte qui peuvent conduire à la rupture de la liaison ou à la déformation de l'élément de carrosserie adjacent à celui qui subit la contrainte.

En outre, ces dispositifs de fixation connus ne permettent pas de positionner avec précision et d'adapter les différents éléments carrosserie entre eux, en fonction de leurs tolérances de fabrication, ce qui peut nuire à l'aspect général extérieur du véhicule.

La présente invention a donc pour but d'éliminer les inconvénients ci-dessus et de proposer un dispositif d'assemblage d'au moins deux éléments par exemple de carrosserie automobile, permettant un positionnement précis de ces derniers les uns par rapport aux autres, qui soit facilement montable et démontable.

En vue de l'assemblage connu par FR-A-1330050 l'invention propose une assemblage comprenant un dispositif qui assure un verrouillage plus stable de deux éléments même en présence de fortes sollicitations externes.

A cet effet, la présente invention a pour objet un dispositif d'assemblage d'au moins deux éléments adjacents, par exemple de carrosserie automobile, dont les surfaces externes sont destinées à venir en appui l'une contre l'autre, du type comportant un organe de verrouillage constitué d'une tige se prolongeant par une tête s'étendant sensiblement dans une direction perpendiculaire à la tige, un moyen élastique de compression prenant appui à une extrémité sur la surface interne d'un premier élément à assembler et dont l'autre extrémité est solidaire de l'extrémité libre de ladite tige qui traverse axialement un perçage ménagé à travers la paroi du premier élément et un trou allongé ménagé à travers le second élément à assembler, le trou allongé ayant une forme correspondante à la tête de l'organe de verrouillage pour permettre le passage de ladite tête à travers le second élément en position déverrouillée dans laquelle la tête est alignée avec le trou allongé, et des moyens d'indexage formés sur au moins l'un des éléments à assembler et destinés à coopérer avec la tête de l'organe en position verrouillée dans laquelle la tête prend appui transversalement par rapport audit trou allongé par l'intermédiaire de la surface principale de sa base sur la surface interne du second élément, opposée à la surface interne du premier élément, caractérisé en ce que les moyens d'indexage sont formés d'au moins deux protubérances en saillie de la face externe du premier élément, de part et d'autre du perçage axial et aptes à venir se loger dans le trou allongé, les deux protubérances étant disposées sensiblement symétriquement par rapport à la direction transversale du trou allongé précité de façon que la base vienne s'emboîter entre elles en position verrouillée de l'organe, empêchant tout déverrouillage par simple rotation de la tête de l'organe.

L'organe de verrouillage peut présenter avantageusement une forme générale en T, la jambe et la barre du T formant respectivement la tige et la tête de l'organe.

Selon une autre caractéristique de l'invention, les moyens d'indexage comportent dans la direction longitudinale du trou allongé des surfaces pour la réception de la surface principale de la base en position déverrouillée, lesdites surfaces étant logées à l'intérieur du trou allongé de sorte que la tête est partiellement engagée dans celui-ci et située à un niveau axialement différent de sa position verrouillée où la compression engendrée par le moyen élastique est plus élevée.

Dans une variante de réalisation, les moyens d'indexage font partie d'une pièce distincte adaptable à travers le premier élément, par exemple par soudage ou agrafage.

Avantageusement, le premier élément précité constitue la pièce distincte sur laquelle sont formés les moyens d'indexage, ladite pièce venant prendre en sandwich à la fois un troisième élément à assembler et le second élément précité par l'intermédiaire d'une surface périphérique entourant la base des moyens d'indexage et venant en appui contre la face interne du troisième élément qui est percé d'une ouverture allongée correspondante au trou allongé précité pour le passage des moyens d'indexage.

Selon encore une autre caractéristique de l'invention, les moyens d'indexage forment une empreinte de forme complémentaire à celle de la base de l'organe de verrouillage, ce qui assure un positionnement précis des différents éléments à assembler.

Dans une variante de réalisation, les protubérances précitées font saillie de la surface interne du second élément pour bloquer en rotation la base en position verrouillée.

Dans ce cas, la base de la tête de l'organe de verrouillage peut présenter une surface parfaitement plane.

Dans une autre variante, la base précitée de l'organe de verrouillage comporte une partie axialement surélevée par rapport à sa surface principale et destinée à s'emboîter en position verrouillée entre les protubérances qui sont logées de préférence entièrement dans le trou allongé du second élément.

Avantageusement, la tige et la tête de l'organe de verrouillage sont en matériaux différents.

La tige peut être par exemple métallique pour qu'elle résiste aux contraintes exercées par le ressort de compression et par les éléments de carrosserie et la tête en matière plastique pour éviter d'endommager l'aspect externe de la carrosserie, par exemple de rayer la peinture.

Selon une autre caractéristique de l'invention, la tête de l'organe de verrouillage est percée d'un orifice destiné à coopérer avec un outil tel qu'un crochet servant à positionner sélectivement l'organe en position verrouillée ou déverrouillée, par traction axiale.

L'invention sera mieux comprise et d'autres buts, caractéristiques, détails et avantages de celle-ci apparaîtront plus clairement dans la description explicative qui va suivre de plusieurs variantes de réalisation particulières, actuellement préférées de l'invention, données uniquement à titre d'exemple illustratif et non limitatif, en référence aux dessins schématiques annexés, dans lesquels :
La figure 1 est une vue en perspective et éclatée du dispositif d'assemblage de la présente invention.
La figure 2 est une vue schématique, partielle et en perspective d'un pare-chocs avant monté sur la carrosserie d'un véhicule automobile.
La figure 3 est une vue schématique et en perspective du dispositif de l'invention en position déverrouillée, associé à un crochet de manoeuvre, suivant la flèche III sur la figure 2.
La figure 4 est une vue similaire à celle de la figure 3, mais avec le dispositif d'assemblage en position verrouillée.
La figure 5 est une vue schématique et en coupe d'une variante du dispositif de l'invention, suivant la ligne V-V de la figure 4.
La figure 6 est une vue en perspective et éclatée de l'organe de verrouillage du dispositif de l'invention.
La figure 7 est une vue éclatée et en coupe longitudinale de l'organe de verrouillage de la figure 6.
La figure 8 est une vue éclatée et en coupe transversale de l'organe de verrouillage de la figure 6.
La figure 9 est une vue plane d'une autre variante du dispositif de la figure 1, suivant la flèche IX, l'organe de verrouillage ayant été omis.
Les figures 10 et 11 sont des coupes brisées à plans parallèles de la figure 9, suivant les lignes X-X et XI-XI, avec l'organe de verrouillage en position verrouillée et déverrouillée respectivement.

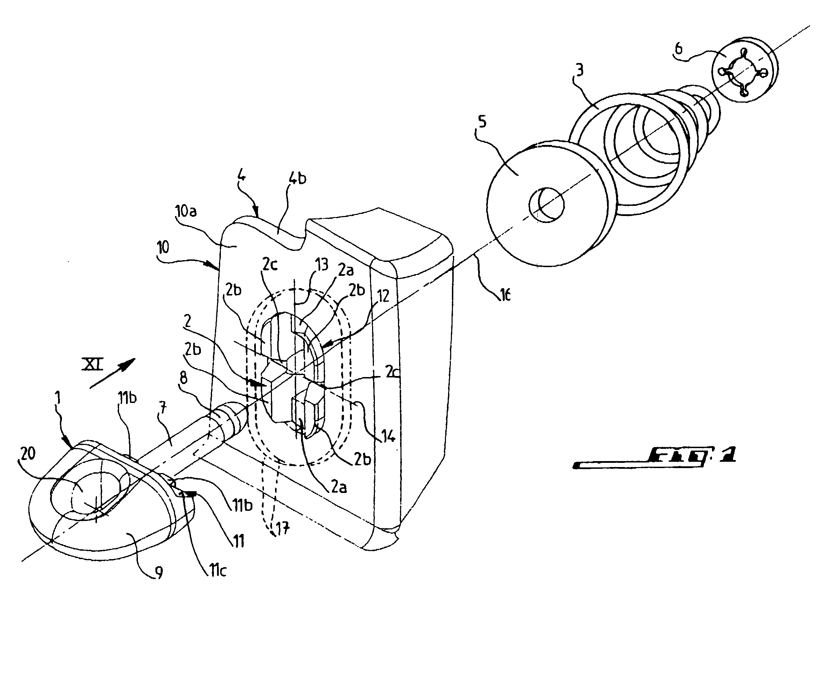

Suivant l'exemple de réalisation représenté sur la figure 1, le dispositif d'assemblage de l'invention comporte un organe de verrouillage 1, des moyens d'indexage 2 et un ressort de compression 3.

On a représenté sur la figure 1 un ressort de compression conique, mais bien entendu, on peut prévoir en variante un ressort hélicoïdal, à lame ou tout autre moyen élastique.

Le ressort 3 prend appui à l'une de ses spires d'extrémités sur la surface interne 4a d'un premier élément de carrosserie tel qu'une peau de pare-chocs 4, par l'intermédiaire d'une rondelle d'appui 5.

L'autre spire d'extrémité du ressort 3 est solidaire d'une rondelle de retenue 6 qui vient s'ajuster autour de l'extrémité libre d'une tige 7, dans une gorge circulaire 8.

La tige 7 traverse axialement le ressort 3, la rondelle d'appui 5 et se prolonge à son autre extrémité par une pièce sensiblement annulaire 9 formant la tête de l'organe de verrouillage 1.

L'organe de verrouillage 1 présente une forme générale en T, la jambe et la barre du T formant respectivement la tige 7 et la pièce sensiblement annulaire 9.

Le dispositif de l'invention est agencé pour permettre l'assemblage de l'élément de pare-chocs 4 avec un autre élément de carrosserie 10. L'assemblage des éléments 4 et 10 s'effectue en appliquant l'une contre l'autre leur surface en regard ou externe 4b et 10b respectivement.

La tête 9 de l'organe de verrouillage 1 est apte à venir en appui par sa base 11 contre la surface interne 10a de l'élément de carrosserie 10, de manière à venir enserrer les éléments 4 et 10 entre la tête 9 de l'organe de verrouillage et le ressort 3.

Un trou allongé de forme oblongue 12 est ménagé à travers le second élément de carrosserie 10, la forme du trou oblong 12 correspondant au contour externe de la base 11 de la tête 9.

De manière générale, le trou allongé 12 doit être conformé de manière à permettre le passage de la tête 9 de l'organe de verrouillage 1, lorsque ladite tête 9 est alignée avec le trou allongé 12.

Bien entendu, le trou 12 peut présenter une forme allongée quelconque, par exemple rectangulaire, en ellipse ou autre.

Le trou allongé 12 défini dans le sens de sa longueur une direction longitudinale 13 et dans le sens de sa largeur une direction transversale 14 (voir figures 1 et 9).

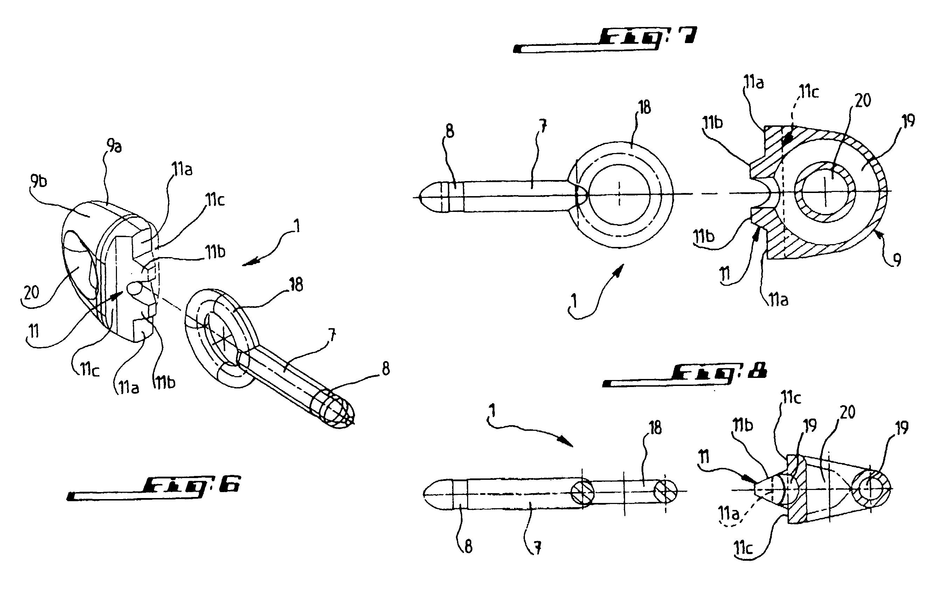

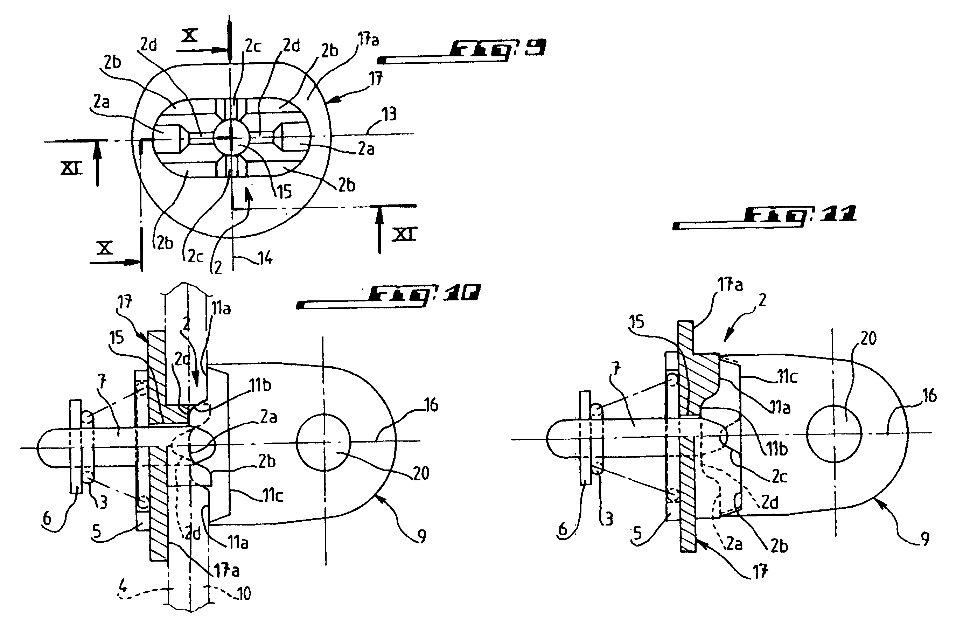

La tige 7 traverse axialement un perçage 15 (voir figure 5) ménagé dans le premier élément de pare-chocs 4 et qui est coaxial avec l'axe 16 du trou oblong 12.

La tige 7 est séparée de la tête 9 par la base 11 formant un épaulement s'étendant suivant une direction perpendiculaire à l'axe de la tige 7.

La base 11 présente dans sa longueur une surface étagée constituée d'une surface principale 11a se prolongeant de part et d'autre de la tige 7 par deux plots surélevés 11b adjacents à la tige 7.

La base 11 de la tête 9 présente également dans sa largeur une surface étagée constituée par la surface principale 11a ou les plots 11b qui se prolongent latéralement par deux épaulements sous-jacents 11c.

Les moyens d'indexage 2 forment une empreinte de forme complémentaire à celle de la base 11 et ménagée en saillie de la surface externe 4b de l'élément de pare-chocs 4.

On voit sur la variante de la figure 5 que les moyens d'indexage 2 peuvent être formés en creux dans l'épaisseur même de l'élément de carrosserie 4.

Les épaulements sous-jacents 11c et les plots surélevés 11b présentent des parois latérales sensiblement biseautées pour permettre un ajustement précis et automatique dans l'empreinte complémentaire des moyens d'indexage 2.

Comme cela est mieux visible sur la figure 9, l'empreinte 2 comporte un creux ou un lamage en forme de croix, centré sur le perçage 15 et constitué de deux paires 2a et 2c de surfaces diamétralement opposées et orientées respectivement dans la direction longitudinale 13 et transversale 14 pour la réception respectivement de la surface principale 11a et des plots 11b en position respectivement déverrouillée et verrouillée de l'organe 1, et quatre protubérances 2b ménagées en saillie de la face externe 4b du premier élément 4, aux quatre coins du creux en forme de croix.

La paire de surfaces 2a se prolonge, dans la direction longitudinale 13, par une autre paire de surfaces 2d disposées de part et d'autre du perçage 15 et à un niveau inférieur à celui des surfaces 2a pour recevoir les plots 11b en position déverrouillée de l'organe 1.

On voit clairement sur les figures 1 et 9 que le creux en forme de croix est plus long dans la direction longitudinale 13 que dans sa direction transversale 14.

La tête 9 de l'organe de verrouillage 1 est destinée à être reçue entre les deux paires de protubérances 2b situées de part et d'autre de l'axe 14 et de l'axe 13, lorsque l'organe de verrouillage 1 est respectivement en position verrouillée ou déverrouillée.

L'empreinte des moyens d'indexage 2 présente une symétrie axiale par rapport à l'axe 16.

L'empreinte 2 peut être formée par moulage lors de la fabrication du pare-chocs 4, ou elle peut faire partie d'une pièce distincte 17 (représentée en traits interrompus sur la figure 1) adaptable à travers le premier élément 4, par exemple par soudage ou agrafage.

Cette pièce distincte 17 peut également être adaptée sur le premier élément 4 par un appui simple comme mieux représenté sur les figures 9 à 11. La pièce 17 joue le rôle ici de premier élément à assembler et comporte par exemple une collerette périphérique 17a destinée à venir en appui contre la surface externe 4a du premier élément 4 (faisant office ici de troisième élément à assembler) et entourant la base de l'empreinte 2 qui traverse un perçage allongé (non représenté) correspondant de ce troisième élément.

Dans ce cas, l'empreinte 2 traverse à la fois le troisième 4 et le second 10 éléments à assembler et la pièce 17 peut être réutilisée ou remplacée sans avoir à changer la carrosserie du véhicule.

On voit sur les figures 6 à 8, que l'organe de verrouillage 1 est constitué de deux parties, la tige 7 étant monobloc avec un anneau métallique 18 qui vient s'ajuster dans un logement annulaire 19 prévu intérieurement dans la tête en plastique 9 séparée de la tige 7.

La tête 9 peut être prévue par exemple en deux parties symétriques 9a, 9b (voir figure 6) qui viennent s'emboîter autour de l'anneau 18 solidaire de la tige 7.

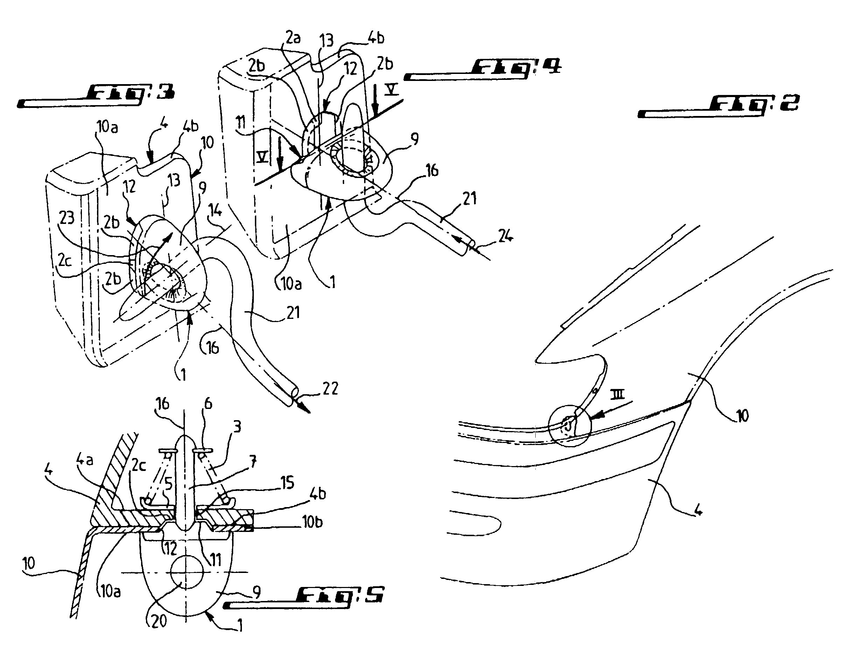

La tête 9 présente un orifice central 20 pour le passage par exemple de l'extrémité d'un crochet de manoeuvre 21, illustré sur les figures 3 et 4.

On va maintenant décrire le fonctionnement du dispositif d'assemblage de l'invention en référence aux figures 2 à 5 et 10 et 11.

On a représenté sur la figure 2, une vue d'ensemble d'un pare-chocs 4 d'un véhicule automobile fixé sur une structure avant 10 par l'intermédiaire du dispositif de l'invention indiqué par la flèche III.

Une fois le dispositif de l'invention monté sur l'élément de carrosserie 4, la tête 9 de l'organe de verrouillage 1 est orientée dans la direction longitudinale 13 du trou oblong 12 de l'élément de carrosserie 10, de sorte que l'on peut facilement et rapidement assembler ou séparer le pare-chocs 4 de l'élément de carrosserie 10 en approchant et en éloignant l'élément de pare-chocs 4 de l'élément 10 dans la direction axiale 16.

Cette position de l'organe de verrouillage 1 est dite déverrouillée et elle est représentée sur les figures 3 et 11.

Dans cette position déverrouillée, la surface principale 11a, les plots 11b et l'épaulement 11c de la base 11 reposent respectivement sur les surfaces 2a et 2d du creux en forme de croix et sur le sommet des protubérances 2b de l'empreinte 2.

Bien entendu, un triple contact simultané entre la base 11 et l'empreinte 2 étant pratiquement difficile à réaliser, il est probable que seule l'une des surfaces de la base 11 soit en contact avec l'empreinte, les autres surfaces étant simplement au droit des surfaces correspondantes de l'empreinte.

Pour déplacer l'organe de verrouillage 1 en position verrouillée, on tire sur la tête 9 dans la direction de la flèche 22 c'est-à-dire dans la direction axiale 16 et on la fait pivoter d'un quart de tour comme indiqué par la flèche 23 (figure 3), à l'aide par exemple du crochet 21, de sorte que la tête 9 vienne s'aligner avec la direction transversale 14 précitée.

On relâche ensuite la tête 9 contre la surface interne 10a du second élément 10, comme indiqué par la flèche 24 (figure 4). Il est nécessaire de tirer et de relâcher la tête 9 dans la direction de l'axe 16 car en position déverrouillée la tête 9 est partiellement engagée dans l'ouverture 12.

Dans cette position verrouillée, la surface principale 11a de la base 11 repose contre la surface interne 10a de l'élément de carrosserie 10 et on obtient ainsi l'assemblage des éléments de carrosserie 4 et 10.

Lors du passage de la position déverrouillée à la position verrouillée, la tête 9 s'écarte de l'élément de pare-chocs 4 d'une distance égale au dénivellé entre les surfaces 2a de l'empreinte et la face interne 10a du second élément 10 en position assemblée, par exemple de l'ordre de l'épaisseur de l'élément de carrosserie 10, ce qui engendre une compression additionnelle du ressort 3 en position verrouillée qui s'ajoute à la précontrainte initiale du ressort 3, en position déverrouillée.

En effet, comme cela apparaît clairement sur les figures 10 et 11, la tête 9 de l'organe de verrouillage est surélevée en position verrouillée par rapport à sa position déverrouillée.

Les éléments 4 et 10 sont assemblés par un moyen élastique 3 ayant de préférence une raideur très élevée permettant de compenser et d'encaisser les chocs éventuels dans la direction axiale 16, pour éviter tout déboîtement intempestif des plots 11b d'entre les protubérances 2b en position verrouillée.

On voit sur les figures 10 et 11 que les surfaces 2a et 2c sont sensiblement au même niveau, mais on pourrait prévoir ces surfaces à des niveaux différents, comme cela est visible sur la figure 1, sans sortir du cadre de l'invention.

On voit également sur la figure 1 que les protubérances 2b font saillie de la surface interne 10a du second élément 10, mais ces protubérances peuvent en variante être complètement escamotées dans le trou oblong 12, comme visible sur les figures 10 et 11, le point essentiel étant que ces protubérances empêchent la rotation de l'organe de verrouillage de sa position verrouillée vers sa position déverrouillée, à moins d'exercer d'abord une traction axiale sur cet organe afin de dégager la base 11 de son logement défini entre les protubérances 2b et les surfaces 2c.

En effet, le dispositif de l'invention a pour fonction d'assurer un verrouillage stable des éléments 4 et 10 ensemble, même en présence de vibrations ou de chocs importants, tout en permettant un déverrouillage simple et rapide en vue du remplacement de l'un de ces éléments.

Bien entendu la forme de la base 11 peut être modifiée sans sortir du cadre de la présente invention et présenter par exemple une surface parfaitement plane, dans le cas par exemple où les protubérances 2b font saillie hors du second élément 10.

Bien que l'invention ait été décrite en liaison avec plusieurs variantes de réalisation particulières, il est évident qu'elle n'y est nullement limitée et qu'elle comprend tous les équivalents techniques des moyens décrits et leurs combinaisons si celles-ci entrent dans le cadre des revendications qui suivent.

## Revendications

1. Assemblage mécanique démontable, comprenant un dispositif d'assemblage et au moins deux éléments sélectivement assemblés (4, 10, 17), tels que deux pièces de carrosserie automobiles, présentant des surfaces en vis-à-vis (4b, 10b) percés de premier et second orifices respectifs (15, 12) dont le second au moins est allongé et de direction transversale (14), le dispositif d'assemblage comprenant une tige (7) traversant au moins le premier orifice (15), un ressort de compression (3) enfilé sur la tige (7) et dont une première extrémité, plus proche du premier élément (4, 17) que du second (10), est fixée à une première extrémité (8) de la tige, une tête (9) manoeuvrable en rotation, plus proche du second élément (10) que du premier (4, 17) et fixée à une seconde extrémité de la tige, et des reliefs d'indexage (2, 11b) définissant, par une rotation de la tète (9), une position déverrouillée du dispositif, dans laquelle la tête (9) peut librement traverser le second orifice (12) pour permettre une séparation des éléments (4, 10, 17), et une position verrouillée du dispositif, dans laquelle les éléments (4, 10, 17) sont élastiquement enserrés entre une seconde extrémité du ressort, qui est sollicitée vers le premier élément (4, 17), et la tête (9), qui est en appui sur une surface interne (10a) du second élément (10), les éléments assemblés (4, 10, 17) étant adjacents les uns aux autres en position de verrouillage, les reliefs d'indexage comprennant des premiers (2) et seconds (11b) reliefs d'indexage, dont les premiers (2) sont formés sur au moins l'un des éléments à assembler en formant une pièce distincte (4, 17), et dont les seconds (11b) sont formés sur une base (11) de la tête (9) adjacents à la tige (7) à plus grande proximité relative de la tige (7) que des bords de la tête (9), les premiers reliefs d'indexage (2) étant formés d'au moins deux protubérances (2b) en saillie de la face externe (4b) du premier élément (4, 17), de part et d'autre du premier orifice (15), de telle sorte qu'en position verrouillée les protubérances (2b) viennent s'emboîter dans le second orifice (12), symétriquement par rapport à la direction transversale (14), les seconds reliefs d'indexage (11b) s'emboîtant entre les protubérances (2b) empêchant tout déverrouillage par simple rotation de le tête (9), la tige (7) adoptant respectivement pour les positions déverrouillée et verrouillée du dispositif, par la coopération des reliefs d'indexage des première et seconde positions de translation axiale, et corrélativement le ressort (3) subissant des première et seconde contraintes de compression, dont la seconde est supérieure à la première, **caractérisé en ce que** les premiers et seconds reliefs d'indexage (2) et (11b) coopérent de telle sorte que la dite seconde contrainte de compression du ressort est toujours supérieure à la dite première contrainte de compression indépendamment de l'épaisseur du second élément (10).

2. Assemblage suivant la revendication 1, **caractérisé en ce que** la base (11) de la tête (9) présente une surface principale (11a) plane à partir de laquelle sont formés les seconds reliefs d'indexage (11b) constitués de plots faisant saillie de la base (11), et **en ce que** la tête (9) est en appui par la surface principale (11a) sur le bord du second orifice (12) en position verrouillée du dispositif.

3. Assemblage suivant la revendication 2, **caractérisé en ce que** les premiers reliefs d'indexage (2) comprennent des premières surfaces (2a) dans une direction longitudinale (13) du second orifice (12), ces premières surfaces (2a) étant situées à un niveau moins élevé que les protubérances (2b) suivant l'axe de la tige (7) et recevant la surface principale (11a) de la tête (9) en position déverrouillée.

4. Assemblage suivant la revendication 2 ou 3, **caractérisé en ce que** les premiers reliefs d'indexage (2) comprennent dans une direction longitudinale (13) du second orifice (12) des secondes surfaces (2d) pour la réception des seconds reliefs d'indexage (11b) en position déverrouillée, et dans une direction transversale du second orifice (12) des troisièmes surfaces (2c) pour la réception des seconds reliefs d'indexage (11b) en position verrouillée, les secondes surfaces (2d) étant situées à un niveau moins élevé que les troisièmes surfaces (2c) suivant l'axe de la tige (7).

5. Assemblage suivant l'une quelconque des revendications 1 à 4, **caractérisé en ce que** les protubérances (2b) font saillie de la surface interne (10a) du second élément (10).

6. Assemblage suivant l'une quelconque des revendications 1 à 5, **caractérisé en ce que** les premiers reliefs (2) portés par le premier élément (17) traversent le premier orifice (15) porté par un troisième élément (4).

7. Assemblage suivant la revendication 6, **caractérisé en ce que** le premier élément (17) présente une base (17a) entourant le premier orifice (15) et interposée entre la seconde extrémité du ressort (3) et le troisième élément (4).

8. Assemblage suivant l'une quelconque des revendications précédentes, **caractérisé en ce que** la tête (9) est percée d'un orifice (20) recevant sélectivement un outil tel qu'un crochet (21) permettant de la manoeuvrer en rotation et en translation.

9. Assemblage suivant l'une quelconque des revendications précédentes, **caractérisé en ce que** la tige (7) et la tête (9) sont réalisées dans des matériaux différents, la tige étant de préférence métallique et la tête en matière plastique.

## Claims

1. Detachable mechanical fastening unit including a fastening device and at least two selectively fastened elements (4, 10, 17), such as two motor vehicle body parts, having opposite surfaces (4b, 10b) pierced with first and second respective orifices (15, 12), the second orifice at least being elongated and of transversal direction (14), the fastening device including a rod (7) traversing at least the first orifice (15), a compression spring (3) joined to the rod (7) and having a first extremity closer to the first element (4, 17) than to the second (10) fixed to a first extremity (8) of the rod, a head (9) able to be manoeuvred on rotation closer to the second element (10) than the first. (4, 17) and fixed to a second extremity of the rod, and indexing reliefs (2, 11b) defining via a rotation of the head (9) an unlocked position of the device in which the head (9) is able to freely traverse the second orifice (12) so as to be able to separate the elements (4, 10, 17), and a locked position of the device in which the elements (4, 10, 17) are elastically squeezed between a second extremity of the spring, which is stressed towards the first element (4, 17), and the head (9), which is in support on an internal surface (10a) of the second element (10), the fastened elements (4, 10, 17) being adjacent to one another in a locking position, the indexing reliefs including first (2) and second (11b) indexing reliefs, -the first (2) being formed on at least one of the elements to be fastened (4, 17) by forming a distinct piece, and the second (11b) being formed on a base (11) of the head (9) adjacent to the rod (7) relatively closer to the rod (7) than the edges of the head (9), the first indexing reliefs (2) being formed with at least two protuberances (2b) projecting from the external face (4b) of the first element (4, 17) on both sides of the first orifice (15) so that in a locked position the protuberances (2b) are nested inside the second orifice (12) symmetrically with respect to the transversal direction (14), the second indexing reliefs (11b) being nested between the protuberances (2b) preventing any unlocking via a rotation of the head (9), the rod (7) respectively adopting for the unlocked and locked positions of the device via the cooperation of the indexing reliefs first and second axial translation positions and correlatively the spring (3) undergoing first and second compression stresses, the second stress being greater than the first, **characterised in that** the first and second indexing reliefs (2) and (11b) cooperating in such a way that said second compression stress of the spring is still greater than said first compression stress independent of the thickness of the second element (10).

2. Fastening according to claim 1, **characterised in that** the base (11) of the head (9) has a main flat surface (11a) from which the second indexing reliefs (11b) are formed constituted by blocks projecting from the base (11), and **in that** the head (9) is in support via the main surface (11a) on the edge of the second orifice (12) in the locked position of the device.

3. Fastening according to claim 2, **characterised in that** the first indexing reliefs (2) include first surfaces (2a) in a longitudinal direction (13) of the second orifice (12), these first surfaces (2a) being situated at a level less high than the protuberances (2b) along the axis of the rod (7) and receiving the main surface (11a) of the rod (9) in an unlocked position.

4. Fastening according to claim 2 or 3, **characterised in that** the first indexing reliefs (2) include in a longitudinal direction (13) of the second orifice (12) second surfaces (2d) for receiving the second indexing reliefs (11b) in an unlocked position, and in a transversal direction of the second orifice (12), third surfaces (2c) for receiving the second indexing reliefs (11b) in a locked position, the second surfaces (2d) being situated at a level less high than the third surfaces (2c) along the axis of the rod (7).

5. Fastening according to one of claims 1 to 4, **characterised in that** the protuberances (2b) project from the internal surface (10a) of the second element (10).

6. Fastening according to one of claims 1 to 5, **characterised in that** the first reliefs (2) borne by the first element (17) traverse the first orifice (15) borne by a third element (4).

7. Fastening according to claim 6, **characterised in that** the first element (17) has a base (17a) surrounding the first orifice (15) and inserted between the second extremity of the spring (3) and the third element (4).

8. Fastening according to one of the preceding claims, **characterised in that** the head (9) is pierced with an orifice (20) selectively receiving a tool, such as a hook (21), for operating on rotation and in translation.

9. Fastening according to one of the preceding claims, **characterised in that** the rod (7) and the head (9) are made of different materials, the rod preferably being metallic and the head plastic.

## Patentansprüche

1. Zerlegbarer mechanischer Zusammenbau, umfassend eine Befestigungsvorrichtung und wenigstens zwei selektiv zusammenbaubare, gegenüberliegende Flächen (4b, 10b) aufweisende Bauelemente (4, 10, 17), wie zum Beispiel zwei Automobilkarosseriestücke, welche jeweils mit ersten und zweiten Öffnungen (15, 12) durchbohrt sind, von denen wenigstens die zweite länglich und in querverlaufender Richtung (14) ist, wobei die Befestigungsvorrichtung einen wenigstens die erste Öffnung (15) durchquerenden Stift (7), eine auf dem Stift (7) aufgereihte Kompressionsfeder (3) umfasst und von der ein erstes, dem ersten Bauteil (4, 17) näheres als dem zweiten (10) Ende an einem ersten Ende (8) des Stiftes befestigt ist, einen in Rotation steuerbaren, dem zweiten Element (10) näheren als dem ersten (4,17) und an einem zweiten Ende des Stiftes befestigter Kopf (9), und Relaisindexierungen (2, 11b), die durch eine Rotation des Kopfes (9) eine entriegelte Position der Vorrichtung definieren, in der der Kopf (9) die zweite Öffnung (12) frei durchqueren kann, um eine Trennung der Bauteile (4, 10, 17) zu erlauben, und eine verriegelte Position der Vorrichtung, in der die Bauteile (4, 10, 17) elastisch zwischen einem zweiten Ende der Feder, die zum ersten Bauteil (4, 17) hin angesprochen wird, und dem Kopf (9) eingespannt werden, der aufliegend auf einer internen Fläche (10a) des zweiten Bauteils (10) ist, wobei die zusammengebauten Bauteile (4, 10, 17) in Verriegelungsposition zueinander anliegend sind, wobei die Indexierungsreliefs erste (2) und zweite (11b) Indexierungsreliefs umfassen, von denen die ersten (2) auf wenigstens einem der zusammenzubauenden Bauteile (4, 17) im Format eines unterschiedlichen Stücks gebildet werden und von denen die zweiten (11b) auf einer Basis (11) des Kopfes (9) anliegend relativ zum Stift (7) in größerer Nähe als die Ränder des Kopfes (9) gebildet werden, wobei die ersten Indexierungsreliefs (2) von wenigstens zwei aus der Außenfläche (4b) des ersten Bauteils (4, 17) auf jeder Seite der Öffnung (15) hervorstehenden Protuberanzen (2b) derart gebildet werden, dass die Protuberanzen (2b) sich in verriegelter Position symmetrisch im Verhältnis zur transversalen Richtung (14) in die zweite Öffnung (12) einpassen, wobei sich die zweiten Indexierungsreliefs (11b) zwischen den Protuberanzen (2b) einpassen und dabei jegliche Entriegelung durch einfache Rotation des Kopfes (9) verhindern, wobei der Stift (7) jeweils für die entriegelte und verriegelte Position der Vorrichtung durch das Zusammenwirken der Indexierungsreliefs die erste und zweite axiale Translationsposition einnimmt, und die Feder (3) korrelativ die erste und zweite Kompressionsbeanspruchung erfährt, von der die zweite höher ist als die erste, **dadurch gekennzeichnet, dass** die ersten und zweiten Indexierungsreliefs (2) und (11b) derart zusammenwirken, dass die besagte zweite Kompressionsbeanspruchung der Feder immer größer als die besagte erste Kompressionsbeanspruchung ist, unabhängig von der Dicke des zweiten Bauteils (10).

2. Zusammenbau gemäß Anspruch 1, **dadurch gekennzeichnet, dass** die Basis (11) des Kopfes (9) eine ebene Hauptfläche (11a) aufweist, von der aus die zweiten Indexierungsreliefs (11b) gebildet werden, die von der Basis (11) hervorstehende Vorsprünge bilden, und dass der Kopf (9) in verriegelter Position der Vorrichtung durch die Hauptfläche (11a) aufliegend auf dem Rand der zweiten Öffnung (12) ist.

3. Zusammenbau gemäß Anspruch 2, **dadurch gekennzeichnet, dass** die ersten Indexierungsreliefs (2) erste Flächen (2a) in einer Längsrichtung (13) der zweiten Öffnung (12) umfassen, wobei diese ersten Flächen (2a) sich auf einer weniger erhöhten Höhe als die der Achse des Stiftes (7) folgenden und in entriegelter Position die Hauptfläche (11a) des Kopfes (9) aufnehmenden Protuberanzen (2b) befinden.

4. Zusammenbau gemäß Anspruch 2 oder 3, **dadurch gekennzeichnet, dass** die ersten Indexierungsreliefs (2) in einer Längsrichtung (13) der zweiten Öffnung (12) zweite Flächen (2d) für die Aufnahme der zweiten Indexierungsreliefs (11b) in entriegelter Position umfassen, und in einer Querrichtung der zweiten Öffnung (12) dritte Flächen (2c) für die Aufnahme zweiter Indexierungsreliefs (11b) in verriegelter Position, wobei die zweiten Flächen (2d) sich auf einer weniger erhöhten Höhe als die der Achse des Stiftes (7) folgenden dritten Flächen (2c) befinden.

5. Zusammenbau gemäß Anspruch 1 bis 4, **dadurch gekennzeichnet, dass** die Protuberanzen (2b) aus der inneren Fläche (10a) des zweiten Bauteils (10) hervorstehen.

6. Zusammenbau gemäß Anspruch 1 bis 5, **dadurch gekennzeichnet, dass** die vom ersten Bauteil (17) getragenen ersten Reliefs (2) die von einem dritten Bauteil (4) getragene erste Öffnung (15) durchqueren.

7. Zusammenbau gemäß Anspruch 6, **dadurch gekennzeichnet, dass** das erste Bauteil (17) eine Basis (17a) aufweist, die die erste Öffnung (15) umgibt und zwischen dem zweiten Ende der Feder (3) und dem dritten Bauteil (4) zwischengeschaltet ist.

8. Zusammenbau gemäß einem der vorgenannten Ansprüche, **dadurch gekennzeichnet, dass** der Kopf (9) durch eine Öffnung (20) durchbohrt ist, der selektiv ein Werkzeug,wie zum Beispiel einen Haken (21), aufnimmt, der seine Bedienung in Rotation und Translation erlaubt.

9. Zusammenbau gemäß einem der vorgenannten Ansprüche, **dadurch gekennzeichnet, dass** der Stift (7) und der Kopf (9) aus unterschiedlichem Material realisiert sind, wobei der Stift bevorzugt aus Metall ist und der Kopf aus Kunststoff.
